# Europäisches Patentamt

## European Patent Office

## Office européen des brevets

(19)

(11) Veröffentlichungsnummer: **0 009 624**
**B1**

(12) **EUROPÄISCHE PATENTSCHRIFT**

(45) Veröffentlichungstag der Patentschrift:
**12.01.83**

(51) Int. Cl.³: **G 06 F 15/16, G 06 F 3/00**

(21) Anmeldenummer: **79103201.4**

(22) Anmeldetag: **29.08.79**

(54) **Modular aufgebautes Datenverarbeitungssystem für funktionsorientierten Einsatz.**

(30) Priorität: **27.09.78 DE 2842085**

(43) Veröffentlichungstag der Anmeldung:
**16.04.80 Patentblatt 80/8**

(45) Bekanntmachung des Hinweises auf die Patenterteilung:
**12.01.83 Patentblatt 83/2**

(84) Benannte Vertragsstaaten:
**BE CH FR GB IT NL SE**

(56) Entgegenhaltungen:
**AT-B-299 579**
**AT-B-311 092**
**AT-B-332 145**
**DE-A-2 027 181**
**DE-A-2 546 202**
**DE-A-2 629 973**
**DE-A-2 641 741**
**DE-A-2 732 828**
**DE-A-2 738 594**
**DE-A-2 749 226**
**DE-A-2 810 277**
**GB-A-1 219 464**
**US-A-3 631 401**
**US-A-3 735 365**
**US-A-3 786 433**
**US-A-3 946 365**

(73) Patentinhaber: **SIEMENS AKTIENGESELLSCHAFT**
**Berlin und München, Postfach 22 02 61,**
**D-8000 München 22 (DE)**

(72) Erfinder: **Schwärtzel, Heinz, Dipl.-Math., Staudinger**
**Strasse 55, D8000 München 83 (DE)**
Erfinder: **Hörbst, Egon, Dr., Tellhöhe 8, D-8031 Stockdorf**
**(DE)**
Erfinder: **Geitz, Gerhard, Dipl.-Math., Marschner**
**Strasse 41g, D-8000 München 60 (DE)**
Erfinder: **Sauer, Anton, Dipl.-Ing., Tristanstrasse 14,**
**D-8034 Germering (DE)**

**HARRIS SEMICONDUCTOR "HM-7640/7641 4096-Bit**
**Field Programmable Bipolar PROM", Harris Corpora-**
**tion, Juni 1975, Melbourne, Fla, USA**
**Hasselmeier, Spruth: «Rechnerstrukturen», 1974, S.**
**75–103**
**Elektronik, 1974, Heft 10 S.385**
**ELEKTRONISCHE Rechenanlagen, 1978, Heft 5,**
**S.230–237**
**IBM Technical Disclosure Bulletin, Vol. 19, No.3, Aug.**
**1976, S.1068–1069**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Modular aufgebautes Datenverarbeitungssystem für funktionsorientierten Einsatz

Die Erfindung betrifft gemäss dem Oberbegriff des Anspruches 1 ein modular aufgebautes Datenverarbeitungssystem für funktionsorientierten Einsatz, bei dem ein Rechner mit peripheren Einrichtungen korrespondiert und bei dem für den Dialog zwischen dem Rechner und dem Benutzer eine Funktionstastatur und ein Bildschirm vorgesehen sind.

Funktionsorientierte, d.h. an eng begrenzte Aufgabenbereiche angepasste Datenverarbeitungssysteme sind bisher in der Weise realisiert worden, dass entweder für den betreffenden Anwendungsfall bzw. eine bestimmte Kategorie von Anwendungsfällen besondere Rechner mit anwendungsbezogenen Eigenschaften entwickelt wurden oder allgemein verwendbare Rechner in solche Systeme einbezogen wurden.

Die erste genannte Lösung hat den Nachteil, dass kostenintensive Entwicklungsarbeiten für Einrichtungen geleistet werden müssen, die entsprechend ihrem Verwendungszweck nur in relativ kleinen Stückzahlen hergestellt werden. Die zweite genannte Lösung hat den Nachteil, dass ein allgemein verwendbarer Rechner in aller Regel in bezug auf einen speziellen Anwendungsfall zu aufwendig ist und seine Handhabung für die jeweiligen Benutzer, die in aller Regel keine Fachleute für Datenverarbeitungsanlagen sind, zu unübersichtlich und zu kompliziert ist.

Ein modular aufgebautes Datenverarbeitungssystem für funktionsorientierten Einsatz, bei dem ein Rechner über eine Busleitung mit peripheren Einrichtungen korrespondiert und bei dem für den Dialog zwischen dem Rechner und dem Benutzer eine Funktionstastatur und ein Bildschirm vorgesehen sind, ist aus «Rechnerstrukturen»-Vorträge des Informatik-Symposiums der IBM Deutschland, Wildbad 1973, herausgegeben von H. Hasselmeier u.W.G. Spruth im R.Oldenbourg Verlag München, Wien, 1974, S. 75–103, vergl. insbesondere Abbildung 3, bekannt. Dieses System ist in zumindest drei intelligente Komponenten unterteilt, nämlich in

a) einen zentral angeordneten Betriebssystemrechner, an den zumindest eine Funktionstastatur und ein Bildschirm angeschlossen sind,
b) einen in der Peripherie angeordneten Standardperipherierechner mit einer Standardperipherie und
c) wenigstens einen speziellen Peripherierechner, der für die Durchführung der dort beschriebenen Emulation fest mit einer individuell zugeordneten Spezialperipherie ausgestattet ist. Die vorgenannte Veröffentlichung enthält keine Hinweise auf Massnahmen, die einem Nichtfachmann eine einfache Umprogrammierung ermöglichen.

Der vorliegenden Erfindung, wie sie in den Ansprüchen gekennzeichnet ist, liegt die Aufgabe zugrunde, ein Datenverarbeitungssytem zu schaffen, das einen funktionsorientierten Einsatz erlaubt, ohne die oben angeführten Nachteile bekannter Lösungen aufzuweisen. Dabei soll die Bedienung eines solchen Systems, das als «intelligentes Werkzeug am Arbeitsplatz» fungieren können soll, besonders einfach sein. Hardware- und softwaremässig soll das erfindungsgemässe Datenverarbeitungssystem wenig aufwendig sein. Aufgabengemäss soll das Datenverarbeitungssystem eine Peripherie mit Rechnern aufweisen, die an ihre jeweilige individuelle Aufgabe durch Programmierung, die nicht von einem Datenverarbeitungsfachmann ausgeführt werden muss, sondern von einem Sachbearbeiter des Kunden vorgenommen werden kann, anpassbar sind.

Im folgenden wird die Erfindung an Hand mehrerer Ausführungsbeispiele für die Erfindung betreffender Figuren erläutert.

Fig. 1 zeigt das Blockschaltbild eines Ausführungsbeispiels für ein erfindungsgemäss aufgebautes modulares Datenverarbeitungssystem für funktionsorientierten Einsatz,

Fig. 2 zeigt das Blockschaltbild einer der Komponenten des gemäss Fig. 1 aufgebauten Datenverarbeitungssystems, nämlich eines Betriebssystemrechners BSR mit den dazugehörenden Hilfseinrichtungen, sowie dem Bindeglied mit den übrigen Komponenten des Systems, nämlich einem Systembus SB, einer Funktionstastatur FT und einem Bildschirm BS.

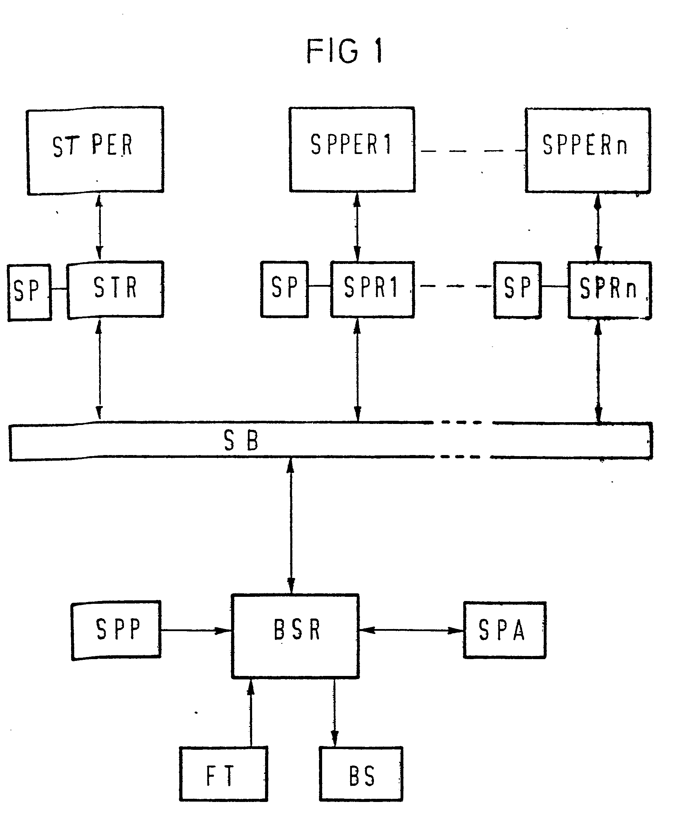

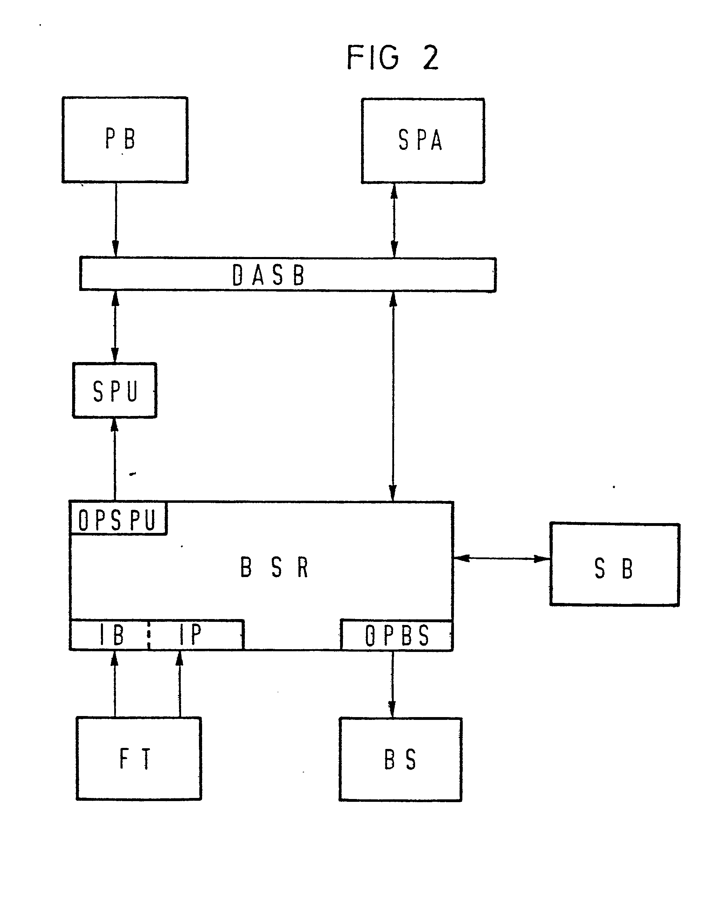

Wie bereits erwähnt, zeigt Fig. 1 das Blockschaltbild eines Ausführungsbeispiels für ein erfindungsgemäss aufgebautes modulares Datenverarbeitungssystem für funktionsorientierten Einsatz. An einen Betriebsystemrechner BSR ist eine Funktionstastatur FT und ein Bildschirm BS angeschlossen. Der Betriebssystemrechner BSR ist in dem gezeigten Ausführungsbeispiel mit dem Mikroprozessor realisiert. Der Anschluss der Funktionstastatur FT ist über einen Interrupt-Bearbeitungsteil IB (Fig. 2) und einen Input Port IP vorgenommen. Mit Hilfe des Interrupt-Bearbeitungsteils IB kann ein über den Systembus SB abzuwickelnder Datenaustausch zeit- und/oder programmgerecht durch eine Dateneingabe über die Funktionstastatur FT unterbrochen werden. Der Bildschirm BS ist über einen Bildschirm Output Port OPBS angeschlossen, vgl. Fig. 2. Ausserdem sind ein allgemeiner Speicher SPA und ein Programmbaustein-Speicher SPP (Fig. 1) an den Betriebssystemrechner BSR angeschlossen. In dem in Fig. 2 gezeigten Ausführungsbeispiel sind der allgemeine Speicher SPA und ein anwendungsbezogener Hilfsspeicher PB, der als ROM, bestehend aus steckbaren Programm-Moduln, realisiert ist, über einen Datenbus DASB und eine Speicherumschaltung SPU an den Betriebssystemrechner BSR angeschlossen. Dieser Anschluss ist über einen Speicherumschaltungs-Output OPSPU vorgenommen, mittels dessen der Betriebssystemrechner BSR wahlweise über die Speicherumschaltung SPU mit dem allgemeinen Speicher SPA oder dem anwendungsbezogenen Hilfsspeicher PB verbindbar ist. Der allgemeine Speicher SPA wird für das Betriebssystem und die «Verwaltung» des Gesamtsystems benutzt. Der anwendungsbezogene Hilfsspeicher PB enthält alle anwendungsspezifischen Informationen. Er kann aufgrund der Steckbarkeit der Programm-Moduln auf einfache Weise auch durch Nichtfachleute auf dem Gebiet der Datenverarbeitung umprogrammiert werden. Die Auswahl des allgemeinen Speichers SPA bzw. des anwendungsbezogenen Hilfsspeichers PB erfolgt entweder durch den Betriebssystemrechner BSR oder den Benutzer mittels der Funktionstastatur FT. Der Standardperipherierechner STR, der in der in Fig. 1 gezeigten Weise über den Systembus SB mit dem Betriebssystemrechner BSR verbunden ist, bedient die Standardperipherie STPER, in der Eingabegeräte, wie alphanumerische Tastaturen, Lochstreifen- bzw. Lochkartenleser, Ausgabegeräte, wie Bildschirme, Drucker, Lochstreifen- bzw. Lochkartenausgaben, externe Massenspeicher, wie Kassetten, Floppy Disks und grössere Rechner, wie beispielsweise Siemens-System 300-16 Bit über Parallel-Interface, Siemens-System 4004/151 über Datenfernübertragung o.ä. enthalten sind. Der Standardperipherierechner STR hat genormte Schnittstellen, beispielsweise die Datenschnittstelle 38 und die Ein-/Ausgabeschnittstelle des Systems 300-16 Bit, CCITT-V24, sowie genormte Prozeduren, nämlich Parallelprozeduren und Datenfernübertragungsprozeduren. Bearbeitungsanforderungen an den Standardperipherierechner STR können aus der Standardperipherie STPER und vom Betriebssystemrechner BSR über den Systembus kommen. Vorzugsweise besteht der Standardperipherierechner aus einem Mikroprozessor und einem diesem fest zugeordneten Speicher SP. Die Spezialperipherierechner SPR1...SPRn, die ebenfalls über den Systembus SB mit dem Betriebssystemrechner BSR verbunden sind, bedienen mit Hilfe der ihnen jeweils individuell zugeordneten Speicher SP Spezialperipherien SPPER1...SPPERn. Unter einer Spezialperipherie kann beispielsweise ein Emulgator für einen anderen Prozessor oder Ein- und Ausgänge für Messplätze (Analog/Digital-Wandler) oder für graphische Terminals verstanden werden. Die spezifischen Schnittstelleneigenschaften und die Vorverarbeitung der jeweiligen Daten werden von einem oder mehreren Spezialperipherierechnern durchgeführt, die über den Systembus SB mit dem Betriebssystemrechner BSR verkehren.

**Patentansprüche**

1. Modular aufgebautes Datenverarbeitungssystem für funktionsorientierten Einsatz, bei dem ein Rechner mit peripheren Einrichtungen korrespondiert und bei dem für den Dialog zwischen dem Rechner und dem Benutzer eine Funktionstastatur und ein Bildschirm vorgesehen sind, wobei der Rechner in zumindest drei intelligente Komponenten unterteilt ist, welche einen zentral angeordneten Betriebssystemrechner, einen in der Peripherie angeordneten Standardperipherierechner und einen oder mehrere in der Peripherie angeordnete Spezialperipherierechner darstellen, wobei der Betriebssystemrechner, der Standardperipherierechner und der bzw. die Spezialperipherierechner über einen Adressen, Steuerinformationen und Daten übertragenden Systembus miteinander verbunden sind, und wobei eine Standardperipherie fest mit dem Standardperipherierechner und jeweils eine Spezialperipherie fest mit dem ihr individuell zugeordneten Spezialperipherierechner verbunden sind, dadurch gekennzeichnet, dass dem Betriebssystemrechner (BSR) eine Speicherumschaltung (SPU) fest zugeordnet ist, die über einen Speicherumschaltungs-Output Port (OPSPU) beeinflussbar ist, dass mittels der durch den Betriebssystemrechner oder die Funktionstastatur gesteuerten Speicherumschaltung (SPU) über einen Datenbus (DASB) ein allgemeiner Speicher (SPA) oder ein anwendungsbezogener Hilfsspeicher (PB) adressierbar ist, so dass entweder Daten zwischen dem allgemeinen Speicher (SPA) und dem Betriebssystemrechner (BSR) oder dem anwendungsbezogenen Hilfsspeicher (PB) und dem Betriebssystemrechner (BSR) auszutauschen sind, dass ein Interrupt-Bearbeitungsteil (IB) innerhalb des Betriebssystemrechners (BSR) vorgesehen ist, mittels dessen ein über den Systembus (SB) abzuwickelnder Datenaustausch zeit- und/oder programmgerecht durch eine Dateneingabe über die Funktionstastatur (FT) unterbrechbar ist und dass der anwendungsbezogene Hilfsspeicher (PB) als ROM realisiert ist, der mit steckbaren Programm-Moduln aufgebaut ist.

2. Modular aufgebautes Datenverarbeitungssystem nach Anspruch 1, dadurch gekennzeichnet, dass der Betriebssystemrechner (BSR) aus einem Mikroprozessor und mindestens einem Arbeitsspeicher besteht.

3. Modular aufgebautes Datenverarbeitungssystem nach Anspruch 1, dadurch gekennzeichnet, dass der Standardperipherierechner (STR) und der bzw. die Spezialperipherierechner (SPR1...SPRn) jeweils mit einem Mikroprozessor realisiert sind.

4. Modular aufgebautes Datenverarbeitungssystem nach Anspruch 3, dadurch gekennzeichnet, dass dem Standardperipherierechner (STR) und jedem Spezialperipherierechner (SPR1...SPRn) jeweils ein individueller Speicher (SP) fest zugeordnet ist.

5. Modular aufgebautes Datenverarbeitungssystem nach einem der vorhergehenden Ansprüche, dadurch gekennzeichnet, dass in der Standardperipherie (STPER) Ein- und/oder Ausgabegeräte vorgesehen sind.

6. Modular aufgebautes Datenverarbeitungssystem nach einem der Ansprüche 1–4, dadurch gekennzeichnet, dass in der Standardperipherie (STPER) externe Massenspeicher vorgesehen sind.

7. Modular aufgebautes Datenverarbeitungssystem nach einem der Ansprüche 1–4, dadurch gekennzeichnet, dass in der Standardperipherie (STPER) zumindest eine systemexterne Datenverarbeitungsanlage vorgesehen ist.

8. Modular aufgebautes Datenverarbeitungssystem nach einem der Ansprüche 1–4, dadurch gekennzeichnet, dass in der Standardperipherie (STPER) zumindest eine Datenfernübertragungseinrichtung vorgesehen ist.

9. Modular aufgebautes Datenverarbeitungssystem nach einem der Ansprüche 1–4, dadurch gekennzeichnet, dass in der Spezialperipherie (z.B. SPER1) Ein- und/oder Ausgänge für zumindest einen Messplatz vorgesehen sind.

10. Modular aufgebautes Datenverarbeitungssystem nach einem der Ansprüche 1–4, dadurch gekennzeichnet, dass in der Spezialperipherie (z.B. SPPER1) zumindest ein graphisches Terminal vorgesehen ist.

11. Modular aufgebautes Datenverarbeitungssystem nach einem der Ansprüche 1–4, dadurch gekennzeichnet, dass in der Spezialperipherie (z.B. SPPER1) zumindest ein Emulator vorgesehen ist.

## Claims

1. Data processing system of modular construction for function orientated use, wherein a computer communicates with peripheral devices and wherein a function keyboard and a screen are provided for the dialogue between the computer and the user, wherein the computer is divided into at least three intelligent components which comprise a centrally arranged operating system computer, a peripherally arranged standard peripheral computer and one or more peripherally arranged special peripheral computers wherein the operating system computer, the standard peripheral computer and the special peripheral computer(s) are connected to one another via a system bus which serves to transmit addresses, items of control information and items of data, and wherein a standard peripheral is permanently connected to the standard peripheral computer and a special peripheral is permanently connected to the special peripheral computer individually assigned thereto, characterised in that the operating system computer (BSR) is permanently assigned a store switching device (SPU) which can be influenced via a store switching output port (OPSPU), that by means of the store switching device (SPU), which is controlled by the operating system computer or by the function keyboard, a general store (SPA) or a use-related auxiliary store (PB) can be addressed via a data bus (DASB) so that data can be exchanged either between the general store (SPA) and the operating system computer (BSR) or between the use-related auxiliary store (PB) and the operating system computer (BSR), that an interrupt processing component (IB) is arranged within the operating system computer (BSR) by means of which a data exchange operation to be carried out via the system bus (SB) can be interrupted at an accurate point of time and/or of the programme by means of data input via the function keyboard (ST) and that the use-related auxiliary store (PB) comprises a ROM constructed from plug-in programme modules.

2. Data processing system of modular construction as claimed in claim 1, characterised in that the operating system computer (BSR) comprises a microprocessor and at least one working store.

3. Data processing system of modular construction as claimed in claim 1, characterised in that the standard peripheral computer (STR) and the special peripheral computer(s) (SPR1...SPRn) are each constructed in the form of a microprocessor.

4. Data processing system of modular construction as claimed in claim 3, characterised in that the standard peripheral computer (STR) and each special peripheral computer (SPR1...SPRn) are each permanently assigned an individual store (SP).

5. Data processing system of modular construction as claimed in one of the preceding claims, characterised in that input and/or output devices are provided in the standard peripheral (STPER).

6. Data processing system of modular construction as claimed in one of the claims 1–4, characterised in that external mass stores are provided in the standard peripheral (STPER).

7. Data processing system of modular construction as claimed in one of the claims 1–4, characterised in that at least one system-external data processing system is provided in the standard peripheral (STPER).

8. Data processing system of modular construction as claimed in one of the claims 1–4, characterised in that at least one data remote transmission device is provided in the standard peripheral (STPER).

9. Data processing system of modular construction as claimed in one of the claims 1–4, characterised in that inputs and/or outputs for at least one test position are provided in the special peripheral (e.g. SPPER1).

10. Data processing system of modular construction as claimed in one of the claims 1–4, characterised in that at least one graphic terminal is provided in the special peripheral (e.g. SPPER1).

11. Data processing system of modular construction as claimed in one of the claims 1–4, characterised in that at least one emulator is provided in the special peripheral (e.g. SPPER1).

## Revendications

1. Système de traitement de données construit par modules pour emploi orienté suivant une fonction, dans lequel un ordinateur correspond avec des installations périphériques et dans lequel sont prévus entre l'ordinateur et l'utilisateur un clavier de fonction et un écran, l'ordinateur étant subdivisé en au moins trois composants intelligents qui représentent un ordinateur du système d'exploitation, un ordinateur périphérique standard disposé à la périphérie et un ou plusieurs ordinateurs périphériques spéciaux disposés à la périphérie, l'ordinateur du système d'exploitation, l'ordinateur périphérique standard et l'ordinateur ou les ordinateurs périphériques spéciaux étant reliés entre eux par un bus de système transmettant des adresses, des informations de commande et des données et une périphérique standard étant reliée de façon fixe avec l'ordinateur périphérique standard et un périphérique spécial étant relié de façon fixe avec l'ordinateur périphérique spécial qui lui est associé individuellement, caractérisé par le fait qu'à l'ordinateur du système d'exploitation (BSR) est associée une commutation de mémoire (SPU) qui est susceptible d'être influencée par l'intermédiaire d'une porte de sortie (OPSPU) de la commutation de mémoire, qu'à l'aide de la commutation de mémoire (SPU) commandée par l'ordinateur du système d'exploitation ou par le clavier de fonction est susceptible d'être adressée, par l'intermédiaire d'un bus de données (DASB), une mémoire générale (SPA) ou une mémoire auxiliaire (PB) orientée suivant l'utilisation de manière que soient à échanger des données soit entre la mémoire générale (SPA) et l'ordinateur du système d'exploitation (BSR) ou la mémoire auxiliaire (PB) orientée suivant l'utilisation ou l'ordinateur du système d'exploitation (BSR), qu'il est prévu à l'intérieur de l'ordinateur du système d'exploitation une section (IB) de traitement des interruptions à l'aide de laquelle est susceptible d'être interrompue, en conformité avec le temps et/ou le programme par une introduction de données par l'intermédiaire du clavier de fonction (FT), un échange de données devant se dérouler par l'intermédiaire du bus de système (SB), et que la mémoire auxiliaire (PB) orientée suivant l'utilisation est réalisée comme une ROM qui est constituée avec des modules de mémoire enfichables.

2. Système de traitement de données construit par modules selon la revendication 1, caractérisé par le fait que l'ordinateur du système d'exploitation (BSR) est constitué par un microprocesseur et par au moins une mémoire de travail.

3. Système de traitement de données construit par modules selon la revendication 1, caractérisé par le fait que l'ordinateur périphérique standard (STR) et l'ordinateur ou les ordinateurs périphériques spéciaux (SPR1...SPRn) sont respectivement réalisés avec un microprocesseur.

4. Système de traitement de données construit par modules selon la revendication 3, caractérisé par le fait qu'à l'ordinateur périphérique standard (STR) et qu'à chaque ordinateur périphérique spécial (SPR1...SPRn) est associée respectivement, de façon fixe, une mémoire individuelle (SP).

5. Système de traitement de données construit par modules selon l'une des revendications antérieures, caractérisé par le fait que dans le périphérique standard (STPER) sont prévus des dispositifs entrée et/ou sortie.

6. Système de traitement de données construit par modules selon l'une des revendications 1–4, caractérisé par le fait que dans le périphérique standard (STPER) sont prévues des mémoires de masse externes.

7. Système de traitement de données construit par modules selon l'une des revendications 1–4, caractérisé par le fait que dans le périphérique standard (STPER) est prévue au moins une installation de traitement de données extérieure au système.

8. Système de traitement de données construit par modules selon l'une des revendications 1–4, caractérisé par le fait que dans le périphérique standard (STPER) est prévue au moins une installation pour la télétransmission de données.

9. Système de traitement de données construit par modules selon l'une des revendications 1–4, caractérisé par le fait que dans le périphérique spécial (par exemple SPER1) sont prévues des entrées et/ou sorties pour au moins un emplacement de mesure.

10. Système de traitement de données construit par modules selon l'une des revendications 1–4, caractérisé par le fait que dans le périphérique spécial (par exemple SPPER1) est prévu au moins un terminal graphique.

11. Système de traitement de données construit par modules selon l'une des revendications 1–4, caractérisé par le fait que dans le périphérique spécial (par exemple SPPER1) est prévu au moins un émulateur.

# FIG 1

# FIG 2